# EUROPÄISCHE PATENTANMELDUNG

(11) **EP 0 742 075 A1**
(43) Veröffentlichungstag der Anmeldung: **13.11.1996**
(21) Anmeldenummer: 95107080.4
(22) Anmeldetag: 10.05.1995
(51) Int. Cl.: B24B 3/02, B23Q 1/25, B24B 41/06

(54) **Aufsatzgerät für eine Werkzeugschleifmaschine**

(71) Anmelder: HPH Werkzeugschleiftechnik GmbH, D-78549 Spaichingen (DE)
(72) Erfinder: Haller, Hans-Peter, 78549 Spaichingen (DE)
(74) Vertreter: Puschmann, Heinz H.

(57) **Zusammenfassung**

Ein Aufsatzgerät mit einem eine Werkstück-Einspannvorrichtung aufweisenden Teilkopf zum Aufsetzen auf einen Aufspanntisch einer Werkzeugschleifmaschine ist dahingehend weiterentwickelt, daß die Anzahl der zur Verfügung stehenden Freiheitsgrade erweitert und eine Einspannung des zu schleifenden Werkstückes in nahezu beliebiger Relation zum Arbeitskopf der Werkzeugschleifmaschine möglich ist, indem eine Platte (8) schwenk- und feststellbar mit dem Aufspanntisch (2) verbunden ist als Träger des über festeinstellbare Zwischenglieder (24) am Support (19) gehaltenen, um seine Querachse (5) schwenkbaren Teilkopfs (3).

## Beschreibung

Die Erfindung betrifft ein Aufsatzgerät mit einem eine Werkstück-Einspannvorrichtung aufweisenden Teilkopf zum Aufsetzen auf einen Aufspanntisch einer manuellen Werkzeugschleifmaschine mit einem Arbeitskopf, wobei der Teilkopf mindestens um eine Achse drehbar und über einen Support längsbeweglich gelagert ist und alle Bauteile derart angeordnet sind, daß sie eine bahngesteuerte Werstückeinspann-Anordnung für die Werkzeugschleifmaschine bilden.

Mit Hilfe numerisch gesteuerten, hochgenauen Werkzeugschleifmaschinen lassen sich bekanntlich Werkzeuge aller Art nach vorgegebenen geometrischen Konfigurationen selbsttätig schleifen, wobei die Anzahl der zu steuernden Bezugsachsen mit der Anzahl der erforderlichen Freiheitsgrade für die durchzuführende Schleifbewegung steigt, was sehr schnell zu relativ komplizierten Steuerungen führt, zumal die einzelnen Bewegungen sowohl gleichzeitig als auch unabhängig voneinander auszuführen sind.

Werkzeugschleifmaschinen dieser Art sind daher überaus teuer in der Anschaffung und Unterhaltung, so daß trotz der Vorteile numerisch gesteuerter Werkzeugschleifmaschinen eine Viehlzahl von handgesteuerten Werkzeugschleifmaschinen immer noch im Einsatz ist.

Handgesteuerte Werkzeugschleifmaschinen, aber auch Werkzeugschleifmaschinen mit numerisch gesteuertem Arbeitskopf können durch gattungsgemäße Aufsatzgeräte, wie sie aus der DE 39 36 699 A1 bekannt sind, aufgewertet werden.

Das dort offenbarte Aufsatzgerät hat sich bewährt, doch zeigte sich im praktischen Betrieb, daß die Anzahl der zur Verfügung stehenden Freiheitsgrade nicht immer ausreichend ist. Als besonders problematisch erweist sich bei der dortigen Anordnung beispielsweise der Schliff von stirnseitigen Schneiden, insbesondere von z. B. Fräsern oder Bohrern.

Aufgabe der Erfindung ist es, das bekannte Aufsatzgerät derart weiterzubilden, daß die Anzahl der zur Verfügung stehenden Freiheitsgrade erweitert und besser als bisher zu nutzen ist und daß eine Einspannung des zu schleifenden Werkstückes in nahezu beliebiger Relation zum Arbeitskopf der Werkzeugschleifmaschine ermöglicht wird.

Diese Aufgabe ist erfindungsgemäß gelöst durch eine Platte, die schwenk- und feststellbar mit dem Aufspanntisch der Werkzeugschleifmaschine verbunden ist als Träger für den Support und des über festeinstellbare Zwischenglieder am Support gehaltenen Teilkopfs.

Mit einem Aufsatzgerät nach der Erfindung sind nunmehr mit nur zwei gesteuerten Achsen auch solche Bearbeitungen von Werkstücken möglich, bei denen früher drei gesteuerte Achsen notwendig waren. Dies gilt eingeschränkt auch für die Bearbeitungen von Formwerkzeugen und für das Erstellen von Radialschliffen.

Die Verschwenkbarkeit des auf der Platte, im weiteren Schwenkplatte genannt, montierten Supports ermöglicht es, ein im Teilkopf fest eingespanntes Werkstück unter beliebigem Winkel zur Drehachse des Arbeitskopfes in einer zum Aufspanntisch parallelen Ebene zu verschieben. Darüberhinaus ermöglicht ein Verschwenken der Schwenkplatte um 180° die Bearbeitung eines Werkstückes von zwei Seiten her, ohne daß das Werkstück bei einer Winkeländerung jedesmal umgespannt werden muß.

Neben dem Verschwenken der Schwenkplatte ist durch eine Halterung des Teilkopfs über Zwischenglieder an dem Support weiterer Freiraum für besondere Einspanungen des Werkstückes gegenüber dem Arbeitskopf gegeben. Dabei ist der Teilkopf betriebsmäßig, d. h. ohne besonderen Aufwand von dem oder den Zwischengliedern lösbar, um eine optimale Anpassung der Werkstückeinspannung für den anstehenden Bearbeitungsgang durch Wahl des oder der Zwischenglieder zu ermöglichen. Insbesondere ist auch durch die Wahl geeigneter Zwischenglieder eine Einspannung des Werkstückes unterhalb der Ebene des Aufspanntisches möglich.

Bevorzugt ist der Support mittels der Schwenkplatte um eine Achse senkrecht zur Aufspanntisch-Fläche auf dem Aufspanntisch verschwenkbar gelagert und über eine der Schwenkplatte zugeordnete Arretiervorrichtung in der Arbeitslage feststellbar.

Damit stützt die Schwenkplatte den Support gänzlich auf dem Aufspanntisch ab, wodurch eine sichere und stabile Auflage des Aufsatzgerätes auf dem Aufspanntisch gewährleistet ist. Die Übertragung der bei der Bearbeitung des Werkstückes auftretenden Kräfte erfolgt im Wesentlichen über die Achse, wobei ein ungewolltes Verschwenken der Schwenkplatte von der vorgesehenen Arretiereinrichtung verhindert wird.

In Ausgestaltung der Erfindung ist vorgesehen, daß die Achse der Schwenkplatte und die Arretiervorrichtung gegenüberliegend jeweils in einem Endbereich der Längsbeweglichkeit des Supports angeordnet sind.

Die Lage der Achse in einem Endbereich der Längsbeweglichkeit des Supports ermöglicht in vorteilhafterweise die Nutzung der gesamten Verfahrlänge des Supports auch nach einer Verschwenkung der Schwenkplatte, insbesondere dann, wenn die Achse in einer Ebene mit der Drehachse des Werkzeuges des Arbeitskopfes liegt. Gegenüberliegend, in der Verfahrrichtung des Supports gesehen, ist im anderen Endbereich des Verfahrbereichs des Supports die Arretiervorrichtung angeordnet. Damit steht der Arretiervorrichtung ein größtmöglicher Hebelarm zwischen Achse und Arretiervorrichtung - bei gleichzeitig möglichst kleiner Baulänge - für eine arretierende Momentenerzeugung zur Verfügung.

In weiterer Ausgestaltung der Erfindung ist vorgesehen, daß der Schwenkplatte ein Schwenklager zugeordnet ist, dessen Achse als eine in einer hinterschnittenen Nut des Aufspanntischs einhakbare Kopfschraube oder als eine eine Durchgangsbohrung des Aufspanntischs durchsetzende Spannschraube ausgebildet ist.

Aufspanntische eingangs genannter Werkzeugmaschinen verfügen in der Regel über hinterschnittene Nuten in V- oder T-Form, oftmals auch über Durchgangsbohrungen, um Werkstücke mittels Kopfschrauben oder Klammern festzuspannen. In vorteilhafter Weise ist so die Schwenkplatte ohne bauliche Maßnahmen am Aufspanntisch festspannbar. Nach Lösen der Arretiereinrichtung kann dann die Schwenkplatte durch das Vorsehen des Schwenklagers leicht in die gewünschte Position geschwenkt werden.

In Weiterbildung der Erfindung kann vorgesehen sein, daß die Arretiervorrichtung ein in die Schwenkplatte eingelassener Elektromagnet ist, dessen aktive Fläche dem Aufspanntisch zugewandt ist, womit eine leicht lösbare, aber dennoch ausreichende Arretierung der Schwenkplatte ermöglicht ist.

Bei der Ausgestaltung der Zwischenglieder hat es sich als besonders vorteilhaft herausgestellt, wenn ein erster Aufspannwinkel als Zwischenglied mit einem Schenkel schwenk- und feststellbar auf dem Support gelagert ist, wobei an seinem zweiten Schenkel ein erstes Ende einer Tragschiene als weiteres Zwischenglied schwenk- und feststellbar gelagert sein kann und daß an dem zweiten Ende der Tragschiene ein erster Schenkel eines zweiten Aufspannwinkels als weiteres Zwischenglied schwenk- und feststellbar gelagert sein kann, an dessen zweitem Schenkel der Teilkopf schwenk- und feststellbar gelagert ist. Die mögliche Vielzahl der Zwischenglieder und ihrer Drehachsen zueinander ermöglicht ein Einspannen des Werkstückes in einer nahezu beliebigen Position gegenüber dem Arbeitskopf bzw. der Drehachse des dort angebrachten Werkzeuges. Die Zwischenglieder ermöglichen dabei durch die Verwendung der Tragschiene auch Einspannungen des Werkstückes unterhalb des Aufspanntischs der Werkzeugschleifmaschine. Dabei ist in einer vorteilhaften Ausgestaltung vorgesehen, daß die Tragschiene längsverstellbar ist, um einen weit einstellbaren Höhenbereich der Werkstückeinspannlage gegenüber dem Aufspanntisch zu erreichen.

In weiterer Ausgestaltung kann noch vorgesehen sein, daß die Tragschiene durch ein abgekröpftes erstes Ende und/oder durch eine oder mehrere Distanzscheiben auf Abstand zu dem zweiten Schenkel des ersten Aufspannwinkels gehalten ist, was weitere Einstellmöglichkeiten erlaubt.

Um für die numerische Steuerung des Teilkopfes gegenüber dem Arbeitskopf die Lage des eingespannten Werkstückes exakt angeben zu können und um eine entsprehende Programmierung zu erlauben, sind in bekannter Weise alle Schwenkachsen mit Teilkreisen versehen und ist die Längsverstellbarkeit der Tragschine z. B. an einem Nonius abzulesen. Durch entsprechende Eingabe der verwendeten Zwischenglieder und ihrer relativen Position zueinander ist damit eine numerische Steuerung der Bewegung des Arbeitskopfs der Werkzeugschleifmaschine, des Teilkopfs und des Supports problemlos möglich.

Die Erfindung ist nachfolgend anhand von drei in der Zeichnung dargestellter Ausführungsbeispiele erläutert. Es zeigen:
- Fig. 1: in Seitenansicht, bezogen auf die Aufspanntisch-Ebene einer Werkzeugschleifmaschine, ein erstes Ausführungsbeispiel des Aufsatzgerätes nach der Erfindung,
- Fig. 2: eine Draufsicht auf das erste Ausführungsbeispiel,
- Fig. 3: in Stirnansicht, bezogen auf den Verfahrweg des Supports, ein zweites Ausführungsbeispiel des Aufsatzgeräts nach der Erfindung,
- Fig. 4: eine Draufsicht auf das Aufsatzgerät nach Fig. 3,
- Fig. 5: eine Seitenansicht des Aufsatzgeräts nach Fig. 3 und
- Fig. 6: in Stirnansicht ein drittes Ausführungsbeispiel eines Aufssatzgeräts nach der Erfindung.

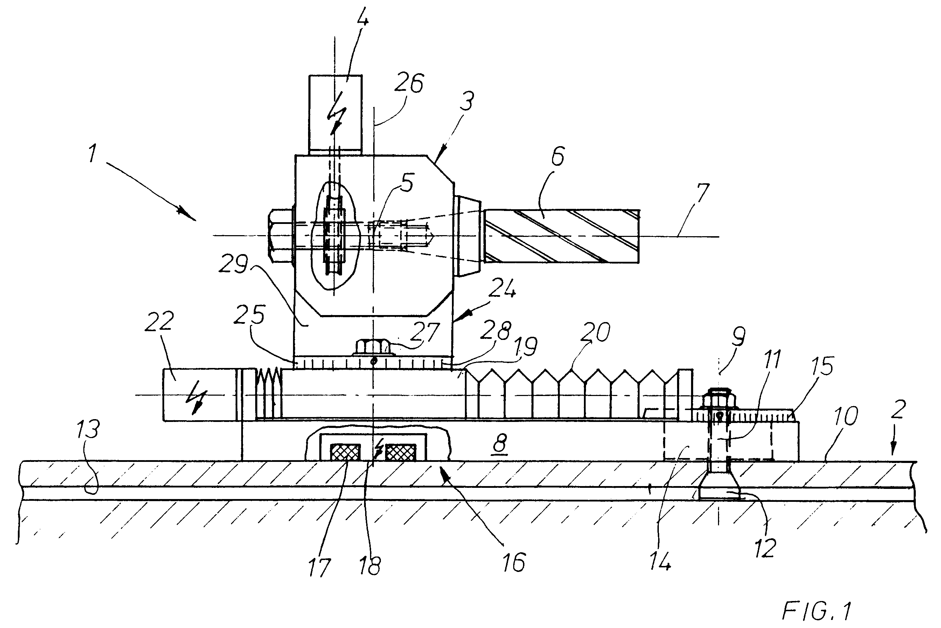

Fig. 1 zeigt in Seitenansicht ein erstes Aufsatzgerät 1, aufgesetzt auf einen Aufspanntisch 2 einer nicht näher dargestellten Werkzeugschleifmaschine. Das Aufsatzgerät 1 umfaßt einen auf einer Schwenkplatte 8 längsbeweglichen Support 19, der an einem Aufspannwinkel 24 als erstes Zwischenglied einen numerisch gesteuerten Teilkopf 3 trägt. Der Teilkopf 3 ist um seine Querachse 5 manuell schwenk- und feststellbar. Im Teilkopf 3 ist ein Werkstück 6, hier ein Fräser, um seine auf der Querachse 5 senkrecht stehenden Längsachse 7 drehbar in einer Werkstück-Einspannvorrichtung festgespannt. Hier erfolgt die Drehung des Werstückes 6 numerisch gesteuert und durch einen als Elektromotor 4, der z. B. als Schritt-, Servo- oder als Teil eines Regelantriebs ausgebildet sein kann, angetrieben. Der Teilkopf 3 ist ferner um eine Hochachse 26, die die Längsachse 7 im Durchstoßpunkt mit der Querachse 5 senkrecht schneidet, verschwenk- und feststellbar.

Die Schwenkplatte 8 ist auf dem Aufspanntisch 2 um eine Achse 9 senkrecht zur Aufspanntisch-Fläche 10 verschwenkbar gelagert. Als Achse 9 dient eine Kopfschraube 11, deren Kopf 12 in einer hinterschnittenen Nut 13 des Aufspanntisches 2 eingehakt ist. Der Schaft der Kopfschraube 11 durchsetzt ein Schwenklager 14 innerhalb der Schwenkplatte 8. In üblicher Weise kann anhand eines Teilkreises 15 die Verschwenkung des Schwenktisches 8 gegenüber einer festen Richtung, z. B. der Richtung der Nuten 13, abgelesen werden.

In die Schwenkplatte 8 ist ferner eine Arretiervorrichtung 16 eingelassen, die aus einem Elektromagneten 17 besteht, dessen aktive Fläche 18 dem Aufspanntisch 2 zugewandt ist.

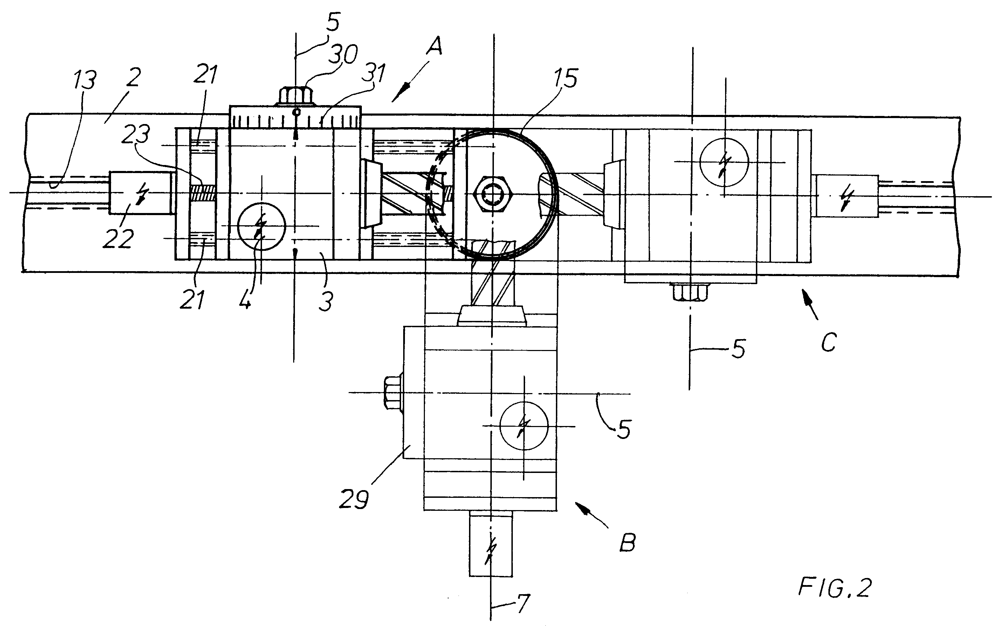

Die Schwenkplatte 8 trägt fest montiert den Support 19, der in üblicher Weise auf durch Balgen 20 verdeckten Führungen 21 (vgl. Fig. 2) längsbeweglich gelagert ist. Die Längsbewegung des Supports 19 erfolgt numerisch gesteuert über eine, von einem z. B. als Schritt-, Servo- oder als Teil eines Regelantriebs ausgebildeten Elektromotor 22 angetriebene Spindel 23.

Um einen großen Abstand zwischen der Arretiervorrichtung 16 und der Achse 9 zu erhalten, damit ein möglichst großer Hebelarm zur Erzeugung eines Arretiermomentes zur Verfügung steht, sind Arretiervorrichtung 16 und Achse 9 jeweils im Endbereich der Supportführung und damit im Endbereich der Längsbeweglichkeit des Supports angeordnet und nutzen somit die zur Verfügung stehenden Abmessungen in günstiger Weise. Daneben zeigt Fig. 2 als weiteren Vorteil der Anordnung der Achse 9, daß bezüglich der Achse 9 die ganze Längsbeweglichkeit des Supports 19 in jeder gezeigten Verschwenkung A, B oder C zur Verfügung steht.

Auf dem Support 19 ist ein Zwischenglied in Form des Aufspannwinkels 24 mit einem ersten Schenkel 25 um die Hochachse 26 schwenk- und feststellbar montiert, wobei durch die Montage mittels einer Schraube 27 diese Verbindung leicht lösbar ist. Auch hier ist ein Teilkreis 28 vorgesehen, um die Verschwenkung z. B. gegenüber der Längsrichtung des Supports 19 feststellen zu können. An dem zweiten Schenkel 29 des Aufspannwinkels 24 ist der Teilkopf 3 um die als Schraube 30 ausgebildete Querachse 5 schwenk- und feststellbar gelagert und betriebsmäßig lösbar. Auch hier kann die Verschwenkung z. B. gegenüber der Vertikalen anhand eines Teilkreises 31 abgelesen werden.

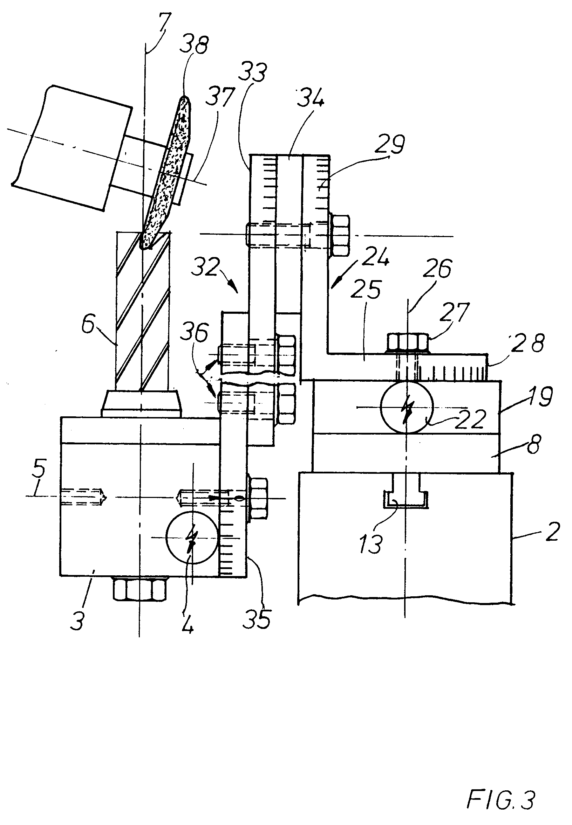

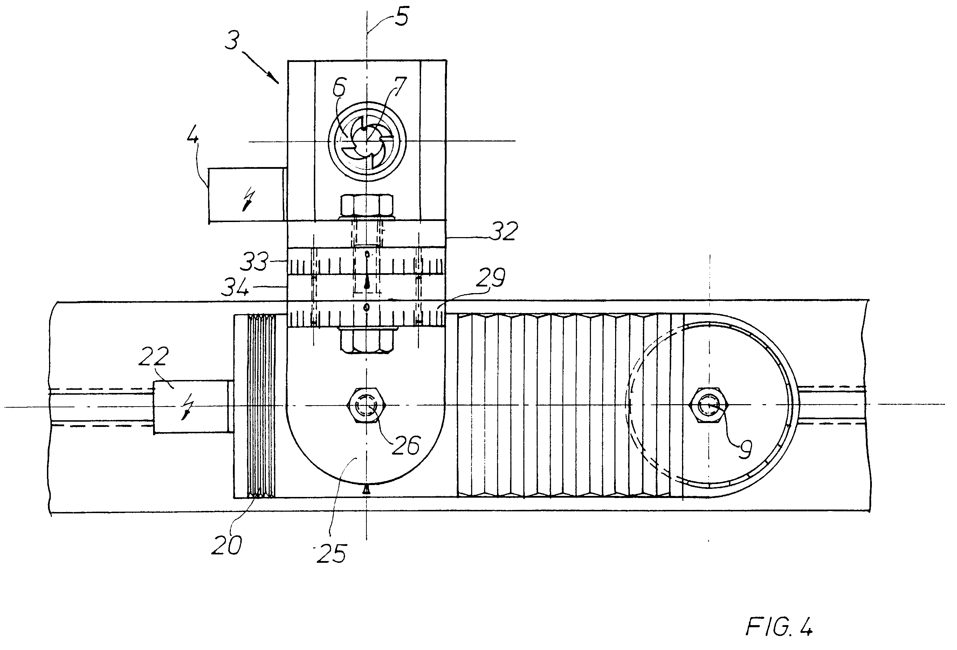

Bei einem zweiten Ausführungsbeispiel (Fig. 3 bis 5), bei dem für gleiche Bauteile die Bezugszeichen des ersten Ausführungsbeispiels weiterverwendet sind, ist als ein weiteres Zwischenglied zwischen Support 19 und Teilkopf 3 eine Tragschiene 32 angeordnet, die mit einem ersten Ende 33 schwenk- und feststellbar, aber betriebsmäßig lösbar, an dem zweiten Schenkel 29 des Aufspannwinkels 24 gelagert ist. Durch eine Distanzscheibe 34 ist die Tragschiene 32 auf Distanz zu dem zweiten Schenkel 29 des Aufspannwinkels 24 gehalten. An dem zweiten Ende 35 der Tragschiene 32 ist der Teilkopf 3 schwenk- und feststellbar gelagert. Die Tragschine 32 ist bei diesem Ausführungsbeispiel zweiteilig ausgeführt und in der Länge verstellbar, indem Schraubverbindungen 36 z. B. in Langlöchern geführt sind oder wie hier in bestimmten Lochkombinationen.

Insbesondere Fig. 3 zeigt, wie mittels solcher Zwischenglieder 24, 32 der Teilkopf 3 in eine Position unterhalb des Aufspanntisches 2 bringbar ist. Kann ferner bei einer Werkzeugschleifmaschine die Drehachse 37 eines Werkzeuges, hier einer Schleifscheibe 38, geschwenkt werden, sind stirnseitige Schrägschliffe an dem Werkstück 6 einfach möglich.

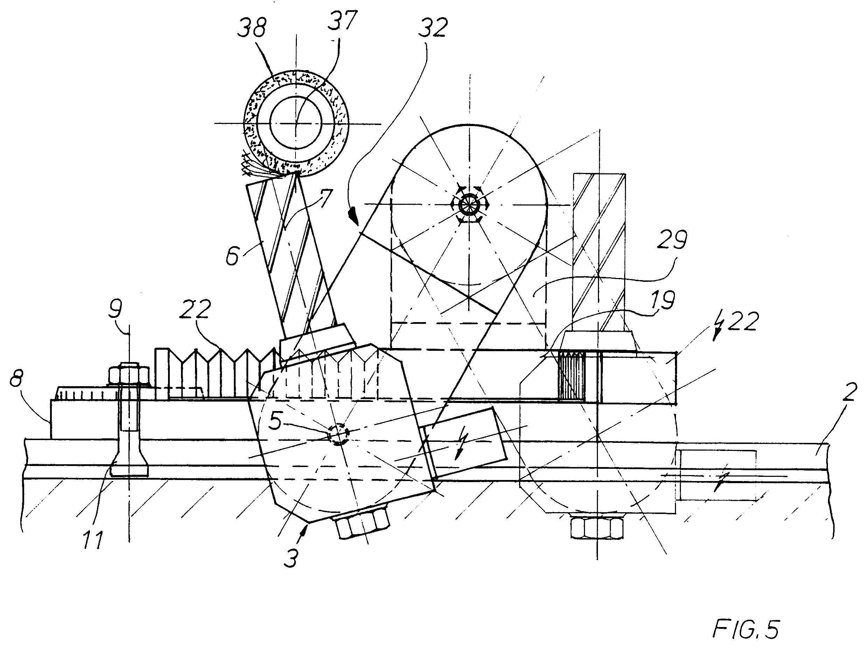

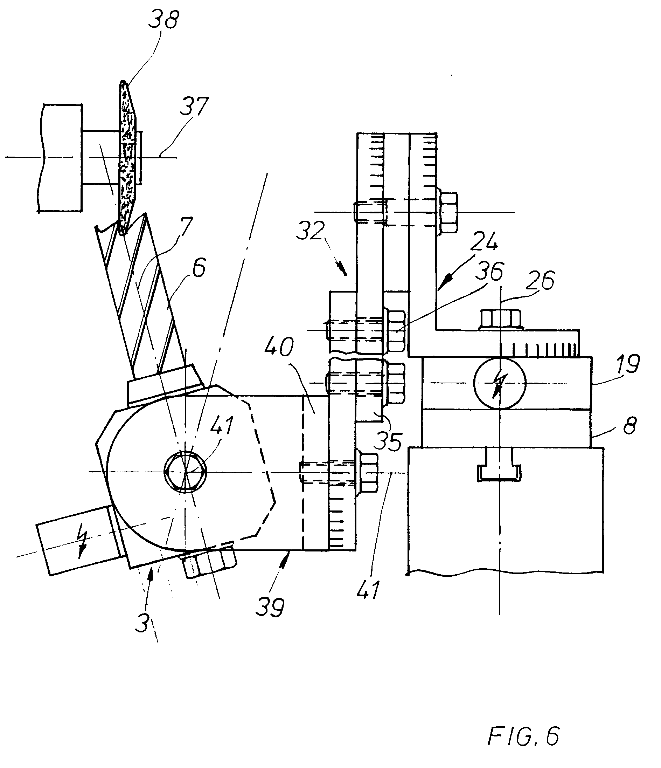

Fig. 6 zeigt eine Werkzeugschleifmaschine, bei der die Drehachse 37 des Werkzeugs 38 nicht schwenkbar ausgebildet, ist, vgl. auch Fig. 3. Um dennoch einen Schrägschliff gem. Fig. 3 durchführen zu können, weist das Ausführungsbeispiel gem. Fig. 5 einen zweiten Aufspannwinkel 39 auf, der mit einem ersten Schenkel 40 um die Achse 41 schwenk- und feststellbar an dem zweiten Ende 35 der Tragschiene 32 gelagert ist. An dem zweiten Schenkel 42 ist wiederum der Teilkopf 3 betriebsmäßig lösbar, schwenk- und feststellbar gelagert. Durch diese Maßnahme steht eine weitere Achse 43 zur Einstellung des Werkstückes 6 gegenüber dem Werkzeug 38 zur Verfügung. Auch bei diesen weiteren Achsen ist, wie den Figuren zu entnehmen, jeweils ein Teilkreis zur Ablesung der Verschwenkung angebracht.

Die Abmessungen und Anordnungen der Zwischenglieder richtet sich nach den jeweiligen Erfordernisse, die durch den Aufspanntisch der Werkzeugschleifmaschine und/oder durch das zu bearbeitende Werkstück vorgegeben sind. Es sind daher die gezeigten Ausführungsbeispiele nur als stellvertretend und das Schutzbegehren gemäß den Ansprüchen nicht einengend anzusehen.

## Patentansprüche

1. Aufsatzgerät (1) mit einem eine Werkstück-Einspannvorrichtung aufweisenden Teilkopf (3) zum Aufsetzen auf einen Aufspanntisch (2) einer manuellen Werkzeugschleifmaschine mit einem Arbeitskopf, wobei der Teilkopf (3) mindestens um eine Achse (5) drehbar und über einen Support (19) längsbeweglich gelagert ist und alle Bauteile derart angeordnet sind, daß sie eine bahngesteuerte Werstückeinspann-Anordnung für die Werkzeugschleifmaschine bilden, **gekennzeichnet** durch eine Platte (8), die schwenk- und feststellbar mit dem Aufspanntisch (2) der Werkzeugschleifmaschine verbunden ist als Träger für den Support (19) und des über festeinstellbare Zwischenglieder (24, 32, 34, 39) am Support (19) gehaltenen Teilkopfs (3).

2. Aufsatzgerät nach Anspruch 1, **dadurch gekennzeichnet**, daß der Support (19) mittels der Schwenkplatte (8) um eine Achse (9) senkrecht zur Aufspanntisch-Fläche (10) auf dem Aufspanntisch (2) verschwenkbar gelagert und über eine der Schwenkplatte zugeordnete Arretiervorrichtung (16) in der Arbeitslage feststellbar ist.

3. Aufsatzgerät nach Anspruch 1 oder 2, **dadurch gekennzeichnet**, daß die Achse (9) der Schwenkplatte (8) und die Arretiervorrichtung (16) gegenüberliegend jeweils in einem Endbereich der Längsbeweglichkeit des Supports (19) angeordnet sind.

4. Aufsatzgerät nach einem oder mehreren der Ansprüche 1 bis 3, **dadurch gekennzeichnet**, daß (9) der Schwenkplatte (8) ein Schwenklager (14) zugeordnet ist, dessen Achse (9) als eine in einer hinterschnittenen Nut (13) des Aufspanntischs (2) einhakbare Kopfschraube (11) oder als eine eine Durchgangsbohrung des Aufspanntischs (2) durchsetzende Spannschraube ausgebildet ist.

5. Aufsatzgerät nach einem oder mehreren der Ansprüche 2 bis 4, **dadurch gekennzeichnet**, daß die Arretiervorrichtung (16) ein in die Schwenkplatte (8) eingelassener Elektromagnet (17) ist, dessen aktive Fläche (18) der Aufspanntisch-Fläche (10) zugewandt ist.

6. Aufsatzgerät nach einem oder mehreren der Ansprüche 1 bis 5, **dadurch gekennzeichnet**, daß ein erster Aufspannwinkel (24) als Zwischenglied mit einem Schenkel (25) schwenk- und feststellbar auf dem Support (19) gelagert ist und daß sein zweiter Schenkel (29) den Teilkopf (3) schwenk- und feststellbar trägt.

7. Aufsatzgerät nach Anspruch 6, **dadurch gekennzeichnet**, daß an dem zweiten Schenkel (29) des Aufspannwinkels (24) ein erstes Ende (33) einer Tragschiene (32) als weiteres Zwischenglied schwenk- und feststellbar gelagert ist und daß das zweite Ende (35) der Tragschiene (32) den Teilkopf (3) schwenk- und feststellbar trägt.

8. Aufsatzgerät nach Anspruch 7, **dadurch gekennzeichnet**, daß an dem zweiten Ende (35) der Tragschiene (32) ein erster Schenkel (40) eines zweiten Aufspannwinkels (39) als weiteres Zwischenglied schwenk- und feststellbar gelagert ist und daß am zweiten Schenkel (42) des zweiten Aufspannwinkels (39) der Teilkopf (3) schwenk- und feststellbar gelagert ist.

9. Aufsatzgerät nach den Ansprüchen 7 oder 8, **dadurch gekennzeichnet**, daß die Tragschiene (32) längsverstellbar ist.

10. Aufsatzgerät nach einem oder mehreren der Ansprüche 7 bis 9, **dadurch gekennzeichnet**, daß die Tragschiene (32) durch ein abgekröpftes erstes Ende und/oder durch eine oder mehrere Distanzscheiben (34) auf Abstand zu dem zweiten Schenkel (29) des ersten Aufspannwinkels (24) gehalten ist.
